# DEMANDE DE BREVET EUROPEEN

(11) **EP 0 704 333 A1**
(43) Date de publication de la demande: **03.04.1996**
(21) Numéro de dépôt: 95420263.6
(22) Date de dépôt: 22.09.1995
(51) Int. Cl.: B60K 20/02

(54) **Pied de levier de commande de boîte de vitesses pour véhicles automobiles**

(30) Priorité: 30.09.1994 FR 9412025
(71) Demandeur: SYSTECO S.A., F-42350 La Talaudière (FR)
(72) Inventeur: Tholly, Paul, F-42170 Saint Just Saint Rambert (FR)
(74) Mandataire: Thivillier, Patrick

(57) **Abrégé**

Le pied de levier est constitué par une pièce monobloc (2), en matière plastique, surmoulée en bout de la partie inférieure du levier (1), ladite pièce (2) présentant, dans un plan très sensiblement perpendiculaire au levier, une partie (2b) apte à être accouplée à une barre de commande de la boîte de vitesses.

## Description

L'invention se rattache au secteur technique des équipements pour véhicules automobiles.

Plus particulièrement, l'invention concerne le levier de commande agissant par l'intermédiaire d'un système de barre sur des éléments de passage et de sélection de la boîte de vitesses.

Le pied du levier, c'est-à-dire la partie située sous le plancher du véhicule automobile, présente des agencements pour être accouplé à une barre de commande de la boîte de vitesses. Généralement, ces agencements comprennent un fourreau tubulaire fixé, par soudure notamment, perpendiculairement aux génératrices du levier. Ce fourreau reçoit intérieurement, une bague de frottement rapportée, coopérant avec des éléments complémentaires que présente l'extrémité correspondante de la barre de commande.

Cette technique de réalisation du pied de levier présente plusieurs inconvénients. Tout d'abord, la fixation du fourreau en bout du tube est une opération délicate et coûteuse. De plus, il n'est pas toujours aisé de respecter scrupuleusement les tolérances de positionnement du fourreau par rapport au levier. De même, il est nécessaire de soumettre le fourreau et l'extrémité correspondante du levier, à un traitement de surface externe déterminé pour éviter la corrosion, étant donné que le pied de levier est directement soumis aux agents atmosphériques extérieurs.

Enfin, les bagues de frottement sont rapportées dans les fourreaux et il est très fréquent de perdre certaines bagues lors du transport et autres manipulations.

Enfin, le levier est généralement exécuté sous forme d'un tube dont le coût est supérieur à celui d'une tige pleine, un tube transmettant, en outre, plus facilement les vibrations, ce qui, bien évidemment, va à l'encontre du but recherché.

L'invention s'est fixée pour but de remédier à ces inconvénients, de manière simple, sûre, efficace et rationnelle.

Le problème que se propose de résoudre l'invention est de diminuer les coûts de fabrication, de supprimer tout risque de corrosion et d'éviter la perte éventuelle des bagues de frottement.

Pour résoudre un tel problème, il a été conçu et mis au point un pied de levier de commande de boîte de vitesses pour véhicules automobiles, constitué par une pièce monobloc, en matière plastique, surmoulée en bout de la partie inférieure du levier, ladite pièce présentant, dans un plan très sensiblement perpendiculaire au levier, une partie apte à être accouplée à une barre de commande de la boîte de vitesses.

La pièce comprend un fourreau tubulaire apte à être surmoulé en bout du levier, dans un plan perpendiculaire à la partie d'accouplement de la barre, ladite partie se présentant sous la forme d'un fourreau.

Pour résoudre le problème posé d'éviter la perte éventuelle de la bague de frottement, cette dernière est exécutée en matière plastique et est montée dans l'alésage du fourreau d'accouplement à la barre, directement lors du moulage de la pièce.

Pour résoudre le problème posé d'assurer la liaison sûre et efficace de la pièce monobloc, cette dernière est rapportée par surmoulage en bout du levier, en combinaison avec des moyens de retenue et d'ancrage, constitués par un moletage.

Avantageusement, la pièce présente des nervures externes de rigidité et est réalisée en polyamide 6-6 chargé de fibres de verre.

Pour résoudre le problème posé de diminuer les vibrations en augmentant le moment d'inertie, tout en ayant pour objectif de diminuer les coûts, le levier est de section pleine, notamment ronde.

L'invention est exposée, ci-après plus en détail à l'aide des dessins annexés, dans lesquels :

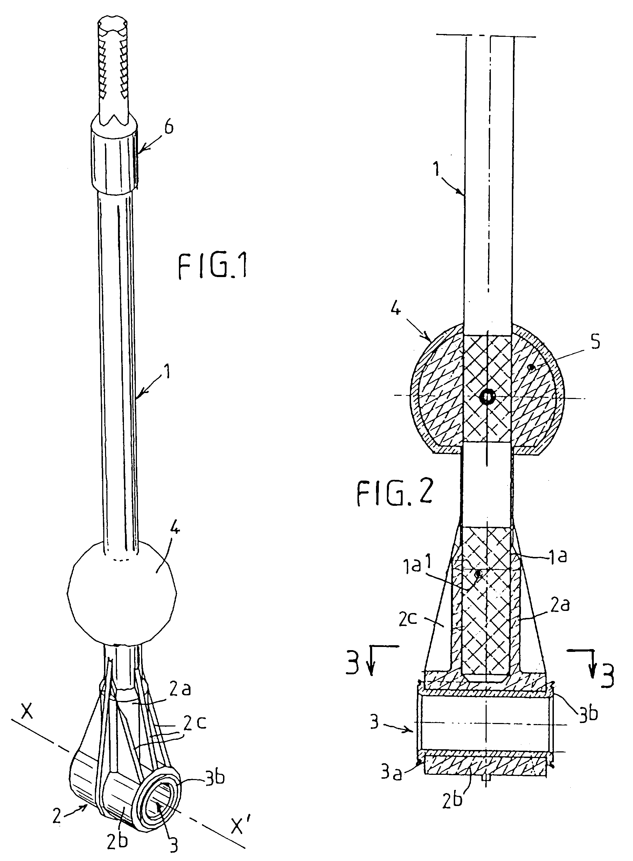

La figure 1 est une vue en perspective d'un levier de commande d'une boîte de vitesses, le pied du levier étant conformé selon les caractéristiques de l'invention.

La figure 2 est une vue en coupe longitudinale de l'ensemble du levier.

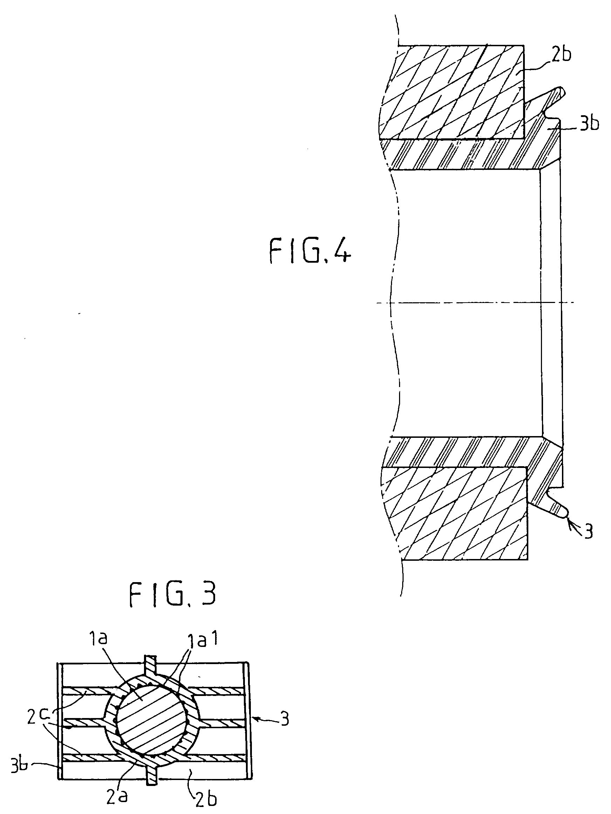

La figure 3 est une vue en coupe transversale considérée selon la ligne 3.3 de la figure 2.

La figure 4 est à une échelle plus importante, une vue partielle de l'extrémité de la bague de frottement inserrée dans le fourreau d'accouplement à la barre.

Selon l'invention, le corps du levier (1) est de section transversale pleine, notamment de section ronde. Le pied du levier (1) est constitué par une pièce monobloc (2) en matière plastique surmoulée, en bout de la partie inférieure du levier (1). Cette pièce (2) est conformée pour assurer la liaison avec la barre de commande de la boîte de vitesses, non représentée et symbolisée par l'axe (XX').

Dans ce but, la pièce (2) comprend un fourreau tubulaire (2a) apte à être surmoulé en bout du levier. Dans un plan perpendiculaire au fourreau (2a), la pièce (2) présente une partie (2b) constituant un manchon, agencé pour être accouplé à une partie correspondante de la barre de commande de la boîte de vitesses. Le fourreau (2a) est surmoulé sur l'extrémité inférieure (1a) du levier, qui présente des moyens de retenue et d'ancrage, tel qu'un moletage (1a1).

Une bague de frottement (3) est montée dans l'alésage du manchon (2b), pour son accouplement à la barre de commande. La bague (3) est surmoulée avec la pièce (2), constituant ainsi un ensemble unitaire, évitant toute perte de la bague.

A noter que la bague (3) peut être surmoulée en même temps que l'enveloppe protectrice (4), que présente, d'une manière connue, la sphère d'articulation (5), surmoulée sur une partie du levier (1). De même, l'ensemble de la pièce (2), réalisée notamment en polyamide 6-6 chargé de fibres de verre, est surmoulée sur la portée (la) du levier, en même temps que la sphère (5).

La bague (3) et l'enveloppe protectrice (4) sont réalisés dans une matière plastique ayant un faible coefficient de frottement.

A noter que les extrémités (3a) et (3b) de la bague (3) sont profilées en constituant des parties de retenue, coopérant avec les ouvertures de l'alésage du manchon (2b).

Compte-tenu des efforts exercés au niveau de la pièce d'accouplement (2), cette dernière présente des nervures externes de rigidité (2c) formées entre le fourreau (2a) et le manchon (2b).

L'extrémité supérieure du levier (1) présente de manière connue, tout type d'agencement pour la fixation du pommeau. Avantageusement, l'extrémité supérieure du levier (1) présente une pièce en matière plastique (6) rapportée par surmoulage, et conformée pour assurer l'emmanchement du pommeau.

Ces caractéristiques ont fait l'objet d'une demande de brevet séparée, dont le demandeur de la présente est également titulaire. Dans cette hypothèse, la pièce en matière plastique (6),destinée à recevoir le pommeau, est surmoulée simultannément à la pièce d'accouplement (2) et à la tête sphérique (5).

Les avantages ressortent bien de la description, en particulier on souligne et on rappelle :
- la suppression des opérations d'usinage et d'assemblage, permettant de diminuer de manière importante les coûts,
- la qualité de fabrication en respectant scrupuleusement les tolérances,
- l'insertion de la bague de frottement pendant l'opération de surmoulage, de manière à constituer un ensemble unitaire,
- la suppression des risques de corrosion, étant donné qu'il n'y a plus de surface métallique apparente, soumise aux agents atmosphériques extérieures,
- la section pleine du corps du levier permettant d'absorber plus facilement les vibrations.

## Revendications

1. Pied de levier de commande de boîte de vitesses pour véhicules automobiles, caractérisé en ce qu'il est constitué par une pièce monobloc (2), en matière plastique, surmoulée en bout de la partie inférieure du levier (1), ladite pièce (2) présentant, dans un plan très sensiblement perpendiculaire au levier, une partie (2b) apte à être accouplée à une barre de commande de la boîte de vitesses.

2. Pied selon la revendication 1, caractérisé en ce que la pièce (2) comprend un fourreau tubulaire (2a) apte à être surmoulé en bout du levier (1), dans un plan perpendiculaire à la partie d'accouplement (2b) de la barre, ladite partie se présentant sous la forme d'un manchon.

3. Pied selon la revendication 1, caractérisé en ce qu'une bague de frottement (3) en matière plastique est montée dans l'alésage du manchon (2b) d'accouplement à la barre, directement lors du moulage de la pièce (2).

4. Pied selon la revendication 1, caractérisé en ce que la pièce (2) est rapportée par surmoulage en bout du levier, en combinaison avec des moyens de retenue et d'ancrage.

5. Pied selon la revendication 4, caractérisé en ce que les moyens de retenue et d'ancrage sont constitués par une opération de moletage (1a1).

6. Pied selon la revendication 1, caractérisé en ce que la pièce (2) présente des nervures externes de rigidité (2c).

7. Pied selon la revendication 1, caractérisé en ce que la pièce (2) est réalisée en polyamide 6-6 chargé de fibres de verre.

8. Pied selon la revendication 1, caractérisé en ce que la bague (3) est réalisée en matière plastique ayant un faible coefficient de frottement.

9. Pied selon la revendication 1, caractérisé en ce que le levier (1) est de section pleine, notamment ronde.
